(19) Europäisches Patentamt
European Patent Office
Office européen des brevets

(11) EP 0 558 870 B1

(12) **EUROPÄISCHE PATENTSCHRIFT**

(45) Veröffentlichungstag und Bekanntmachung des Hinweises auf die Patenterteilung:
**14.05.1997 Patentblatt 1997/20**

(51) Int. Cl.$^6$: **B23K 26/00**

(21) Anmeldenummer: **92810156.7**

(22) Anmeldetag: **02.03.1992**

(54) **Freiformschweissen von Metallstrukturen mit Laser**

Free welding of metal structures casing a laser

Soudage libre de structures métalliques avec un laser

(84) Benannte Vertragsstaaten:
**AT BE CH DE FR GB IT LI**

(43) Veröffentlichungstag der Anmeldung:
**08.09.1993 Patentblatt 1993/36**

(73) Patentinhaber: **SULZER INNOTEC AG**
**CH-8401 Winterthur (CH)**

(72) Erfinder:
• **Dekumbis, Roger, Dr.**
**CH-8050 Zürich (CH)**
• **Kahrmann, Wilfred, Dr.**
**CH-8400 Winterthur (CH)**

(56) Entgegenhaltungen:
**EP-A- 0 161 037        FR-A- 2 642 690**
**US-A- 3 310 423        US-A- 4 323 756**
**US-A- 4 684 781**

**Beschreibung**

Die Erfindung betrifft ein Verfahren zum Herstellen von Metallstrukturen gemäss Oberbegriff von Anspruch 1. Es handelt sich dabei um eine Art Freiformschweissen mit Laser. Die Erfindung bezieht sich auch auf eine Anordnung zum Durchführen des Verfahrens sowie auf Erzeugnisse die mit dem Verfahren gefertigt worden sind.

Aus der US-PS 4 323 756 ist ein Verfahren bekannt, bei dem metallische Körper, beispielsweise Rippen längs des Umfangs eines walzenförmigen Substrats, mittels kontinuierlich betriebenen Laser hergestellt werden. Dabei wird mit dem Laserstrahl auf dem Substrat eine Wechselwirkungszone in Form eines Schmelzbads erzeugt, in welche das pulver- oder drahtförmige Auftragsmaterial gebracht und ebenfalls aufgeschmolzen wird. Nach einer kurzen Wechselwirkungszeit erstarrt das geschmolzene Material. Durch gesteuerte Lenkung des Laserstrahls und/oder Bewegung des Substrats kann der metallische Körper gefertigt werden, wobei dieser Körper durch schichtweises Aufbringen des Auftragsmaterials erzeugt wird. Dieses bekannte Verfahren kann analog zur "Stereolithographie" zu einer Freiformfertigung (Freiformschweissen) weitergebildet werden. Bei der "Stereolithographie" wird schichtweise ein Polymerkörper aus einem flüssigen Harz erzeugt, wobei das Harz unter Einwirkung eines gesteuert bewegten Laserstrahls verfestigt wird.

Nachteil des bekannten Freiformschweissens ist, dass keine feinen Strukturelemente hergestellt werden können. Beispielsweise bei einem wandförmigen Element, dessen Wandstärke 0,5 mm beträgt, ist die Wärmeableitung aus der Wechselwirkungszone unzureichend, um das aufgeschmolzene Material schnell genug erstarren zu lassen. An Eckpunkten von Wandelementen oder bei säulenförmigen Elementen tritt dieses Problem verstärkt in Erscheinung. Es ist Aufgabe der Erfindung, das Freiformschweissen von Metallstrukturen solcherart weiterzubilden, dass auch dünne Strukturelement, insbesondere wand- oder säulenförmige Elemente, deren kleinsten linearen Abmessungen kleiner als ungefähr 0,5 mm sind, erzeugt werden können. Diese Aufgabe wird durch die im kennzeichnenden Teil des Anspruchs 1 genannten Massnahmen gelöst.

Aus der US-A 3 310 423 ist ein Verfahren zur Beschichtung eines Substrats bekannt, bei dem ein auf das Substrat aufgesprühtes Metallpulver mittels Energiepulsen aufgeschmolzen wird, ohne dass dabei auch die Oberfläche des Substrats über dessen Schmelzpunkt aufgeheizt wird. Dieses Verfahren erlaubt ohne Nachbehandlung die Herstellung von Beschichtungen, die gut haften und porenfrei sind. Die Herstellung von freiformgeschweissten Strukturen ist allerdings nicht Gegenstand dieses Verfahrens.

Erfindungsgemäss wird das Auftragsmaterial nicht mehr kontinuierlich sondern portionenweise aufgebracht. Dabei ist es wichtig, dass der Energieeintrag solcherart pulsweise erfolgt, dass während den Pausen zwischen aufeinanderfolgenden Energiepulsen die jeweils aufgetragene Materialmenge genügend Zeit zu erstarren hat, ohne dass dabei Mittel zum zusätzlichen Kühlen eingesetzt werden müssen. Am einfachsten wird die pulsartige Energieeinstrahlung mittels eines gepulst betriebenen Lasers erzeugt. Es ist aber auch gemäss Anspruch 3 möglich, einen kontinuierlich arbeitenden Laser zu verwenden. Dabei wird beispielsweise der Laserstrahl zwischen zwei oder mehr Punkten hin- und hergelenkt, wobei an diesen Punkten Wechselwirkungszonen erzeugt werden, die sich gegenseitig nicht berühren oder gar überlappen.

Als Laser kommen $CO_2$-Gaslaser (Wellenlänge: 10,6 μm) oder Neodym-YAG-Laser (Wellenlänge: 1,06 μm) in Frage. Da wegen Reflexion und Plasmabildung (abhängig von Wellenlänge und Schutzgas) ein grosser Teil der auf das Substrat eingestrahlten Energie verloren geht, muss die Energiedichte des Laserstrahls wesentlich grösser (zehn- bis hundertmal grösser) sein, als die pro Flächeneinheit zum Aufheizen und Schmelzen benötige Wärmemenge ist. Beim $CO_2$-Laser und bei Verwendung von Argon als Schutzgas muss die Energiedichte in der Wechselwirkungszone (ohne Absortion durch das Plasma) mindestens rund 10 kW/cm$^2$ betragen.

Die Energie des Energiepulses kann im Bereich zwischen 0.01 und 500 J liegen. Die pro Puls aufgetragene Materialmenge kann eine Masse im Bereich zwischen 0.001 und 10 mg haben. Abhängig von der herzustellenden Metallstruktur wird das Verhältnis von Pulsdauer zu Dauer zwischen aufeinander folgenden Pulsen im Bereich zwischen 1:2 und 1:100 gewählt; diese Angabe bezieht sich - falls mehrere Wechselwirkungszonen existieren - auf eine dieser Zonen (wobei die von Puls zu Puls sich verschiebende Wechselwirkungszone als jeweils die gleiche angesehen wird). Ist das erwähnte Verhältnis gross (also bei relativ grosser Pulsdauer), so muss die Energie pro Puls klein gewählt werden; oder es muss für eine Zusatzkühlung, beispielsweise mit Wasser, gesorgt werden.

Vorzugsweise liegen die Energie des Pulses zwischen 1 und 2 J, die Pulsdauer zwischen 0,7 und 2 ms und das Verhältnis von Pulsdauer zu Dauer zwischen aufeinander folgenden Pulsen zwischen 1:40 und 1:20.

Wird - wie üblich - das Auftragsmaterial kontinuierlich in Pulverform und mit Schutzgas als Transportmittel der Wechselwirkungszone zugeführt, so geht ein beträchtlicher Teil des Materials verloren. Diesen Verlust kann man reduzieren, indem man mit einer Vorrichtung, die eine zeitabhängige Materialzufuhr ermöglicht, entsprechend der gepulsten Energieeinstrahlung auch für eine portionenweisen Zufuhr des Auftragsmaterials sorgt.

Mit der gepulsten Vorgehensweise können selbstverständlich auch massive Strukturelemente hergestellt werden, die mit dem kontinuierlichen Verfahren erzeugbar wären. Es kann aber vorteilhafter sein, ein Mischverfahren anzuwenden, bei dem nur die feinen Strukturelemente gemäss der Erfindung erzeugt werden, während die Herstellung der übrigen Strukturelemente mit nichtgepulster Energieeinstrahlung durchgeführt wird.

EP 0 558 870 B1

Nachfolgend wird die Erfindung im Zusammenhang mit den Zeichnungen näher erläutert. Es zeigen:

Fig. 1 ein Beispiel, in Schnittdarstellung, zur Herstellung einer dünnen Wand mit einem alten Verfahren (Zusatzkühlung),

Fig. 2 die Herstellung einer Wand mit einem alten oder - im Falle einer dünnen Wand - einem erfindungsgemässen Verfahren,

Fig. 3 eine Schnittdarstellung zur Fig.2,

Fig. 4 ein Leistung-Zeit-Diagramm für eine gepulste Energieeinstrahlung,

Fig. 5 eine Schnittdarstellung wie in Fig.3, mit einem Metalldraht als Auftragsmaterial, anstelle von Metallpulver,

Fig. 6 ein Beispiel zu einer erfindungsgemäss hergestellten Metallstruktur,

Fig. 7 die Aussenkante einer dünnwandigen Turbinenschaufel, die eine erfindungsgemäss hergestellte Panzerung aufweist und

Fig. 8 eine Anordnung zur Durchführung eines erfindungsgemässen Verfahrens.

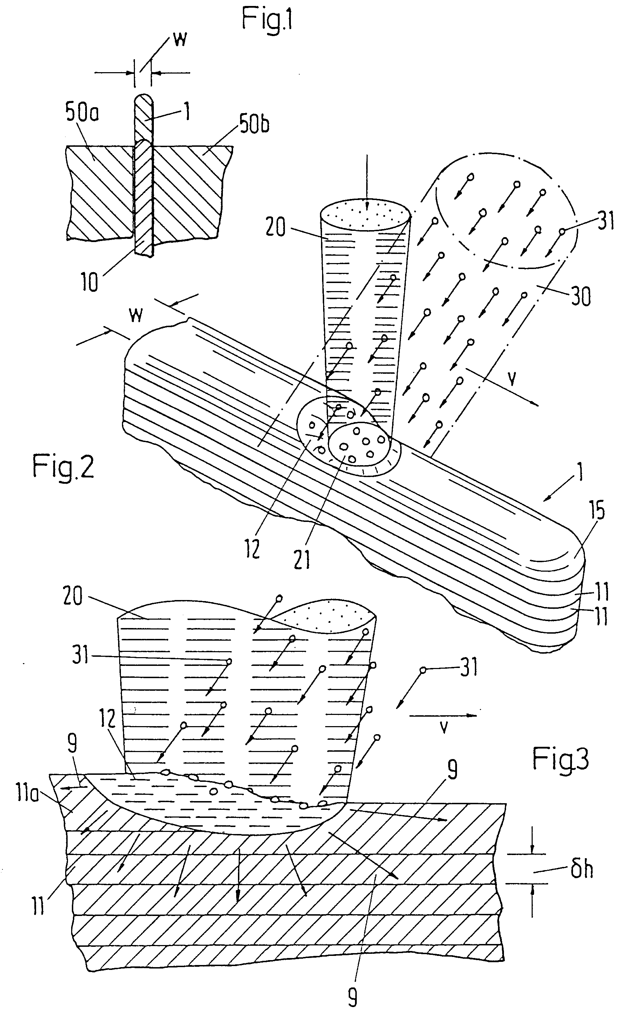

Es ist auch mit den bekannten Verfahren möglich, dünne Wandelemente herzustellen, wenn Mittel zur Zusatzkühlung verwendet werden. In Fig.1 ist illustriert, wie auf den Rand eines plattenförmigen Substrats 10, dessen Wandstärke w beispielsweise nur 0,5 mm beträgt, in Fortsetzung der Plattenebene sich ein Wandelement 1 aufbauen lässt. Ermöglicht wird dies durch zwei wärmeableitende Backen 50a und 50b aus Kupfer, zwischen die das Werkstück eingespannt wird. Beim erfindungsgemässen Verfahren kann auf Zusatzkühlung verzichtet werden.

Anhand des Schrägbilds der Fig.2 und des Schnittbilds der Fig.3 lässt sich das bekannte wie auch das erfindungsgemässe Verfahren erläutern. Es ist folgendes zu sehen: Ein wandförmiges Element 1 (Wandstärke w), das schichtweise (Schicht 11, Schichthöhe $\delta h$) mittels des Laserstrahls 20 und des Pulverstrahls 30 aufgebaut wird; Pulverpartikel 31, deren Bewegung durch Pfeile angedeutet sind; die Relativgeschwindigkeit v (= "Raster-Geschwindigkeit"), mit der die beiden Strahlen 20 und 30 sich gegenüber dem Substrat 1 bewegen; die durch den Laserstrahl bestrahlte Fläche 21 ("Spot") und das die Wechselwirkungszone bildende Schmelzbad 12.

Ein Teil der Pulverpartikel 31 treffen im Schmelzbad 12 auf, wo sie aufschmelzen und das Material zu einer neuen Schicht 11a liefern. Aufgrund gleichzeitig stattfindendem Aufschmelzen und Erstarren bewegt sich das Schmelzbad 12 mit der Raster-Geschwindigkeit v; das Erstarren erfolgt dank der Wärmeleitung, die durch die Pfeile q in Fig.3 dargestellt ist. Da die Temperatur des Substrats auf der Rückseite des Schmelzbads 12 höher als auf der Vorderseite ist, ist die Wärmeableitung in Bewegungsrichtung grösser, was durch die unterschiedlich langen Pfeile q angedeutet ist. Wegen dieser Asymmetrie des Wärmeflusses verringert sich die abgeführte Wärmemenge an einem Eckpunkt 15 (siehe Fig.2) auf weniger als 30 % des Betrags, der für ein Wandelement ohne Eckpunkte gegeben ist. Daher stellt sich bei Eckpunkten ein Wärmestau ein und damit besteht dort in besonderem Mass die Gefahr, dass die Erstarrung nicht rasch genug erfolgt.

Wird nun die Laserenergie erfindungsgemäss pulsartig eingestrahlt, so ist der mittlere Energieeintrag wesentlich geringer und somit ist die mittlere Substrattemperatur ebenfalls geringer. Das hat zur Folge, dass das beim Energiepuls erzeugte Schmelzbad auf ein geringeres Volumen als beim kontinuierlichen Verfahren beschränkt bleibt; insbesondere weist das Schmelzbad eine geringere Tiefe auf. Dadurch kann der fortgesetzte Materialauftrag ohne Störung der Geometrie der bereits aufgebauten Metallstruktur erfolgen.

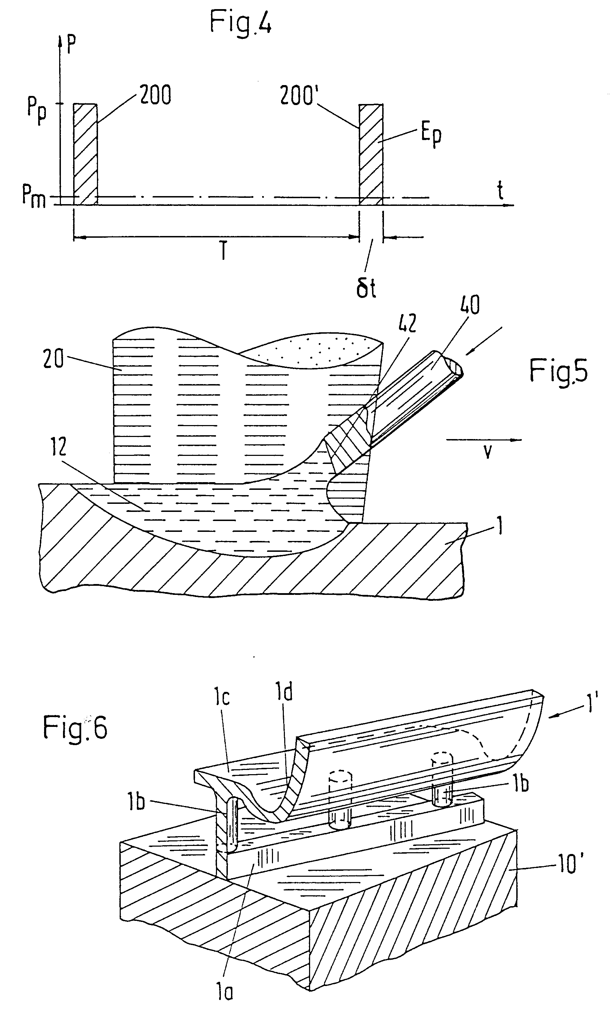

Im Diagramm der Fig.4 ist schematisch der erfindungsgemässe Intensitätsverlauf der Einstrahlung als Funktion von der Zeit t dargestellt. Die Strahlungsleistung P nimmt während dem Puls 200 bzw. 200' den Wert $P_P$ an. Während der Pause zwischen aufeinanderfolgenden Pulsen 200 und 200'ist P gleich Null; man könnte aber auch eine nicht dargestellte Grundleistung ("Simmerleistung") zwecks Vorwärmung wirken lassen. Die weiteren Bezeichnungen in Fig.4 bedeuten folgendes: T ist die Zeitdauer zwischen aufeinander folgenden Pulsen; $\delta t$ ist die Pulsdauer; $P_m$ ist die mittlere eingestrahlte Leistung; und $E_P$ (= Fläche des Pulses) ist die Energie des Pulses. Die Pulse sind rechteckig dargestellt. Sie könnten aber auch beispielsweise glocken- oder sägezahnförmig sein.

Das folgende Ausführungsbeispiel - die Herstellung eines Wandelements mit der Breite w = 0,5 mm - ist repräsentativ für durchgeführte Versuche:

$$E_P = 2 \text{ J}, \qquad \delta t = 1 \text{ ms}, \qquad T = 40 \text{ ms, v} = 0,1 \text{ m/min}, \qquad \delta h = 0,1 \text{ mm},$$

Durchmesser des Spot 21 = w = 0,5 mm,

Auftragsmaterial (Pulver): Inconel 625 (Dichte $\rho$ = 8,4 g/cm$^3$).

Die Energiedichte des Pulses (= $P_P$/Spotfläche, $P_P$ = $E_P/\delta t$) beträgt dabei rund 1000 kW/cm$^2$, die mittlere Leistung $P_m$ (= $E_P/T$) ist 50 W und die pro Puls aufgetragene Materialmenge (= $\rho*v*w*\delta h*T$) ist rund 0,03 mg. Die Überlappung der Wechselwirkungszone von Puls zu Puls beträgt rund 90 %.

Das Auftragsmaterial kann anstatt in Form von Metallpulver auch drahtförmig der Wechselwirkungszone zugeführt werden; dies ist in Fig.5 veranschaulicht: Der Draht 40 wird an der Spitze 42, die mit dem Schmelzbad 12 in Kontakt steht, aufgeschmolzen.

Das erfindungsgemässe Verfahren ermöglicht ein sogenanntes "Fastprototyping" oder "Rapidprototyping", bei dem metallische Körper mit feinen Strukturelementen herstellbar sind. Bei feinen Strukturelementen dominieren die Kapillarkräfte der Schmelzeoberfläche gegenüber der Schwerkraft des aufgeschmolzenen Materials. Daher können solche Strukturelemente bei beliebiger Orientierung bezüglich dem Schwerefeld aufgebaut werden. Mit Fig.6 soll veranschaulicht werden, welche Möglichkeiten dabei gegeben sind: Auf einem Ausgangssubstrat 10' wird eine Metallstruktur 1' errichtet. Zunächst wird Schicht für Schicht eine Rippe 1a hergestellt, deren Breite kleiner als 0,5 mm ist. Auf die Rippe werden säulenförmige Teile 1b aufgebracht. Über diesen Säulen folgt ein horizontales Band 1c, an das schliesslich noch die rinnenförmige Schale 1d angefügt wird. Anders als bei der Stereolithographie, wo die Schichtung horizontal ist, stehen die Schichtebenen beim erfindungsgemässen Verfahren immer senkrecht zu den seitlichen Oberflächen der Metallstruktur 1'.

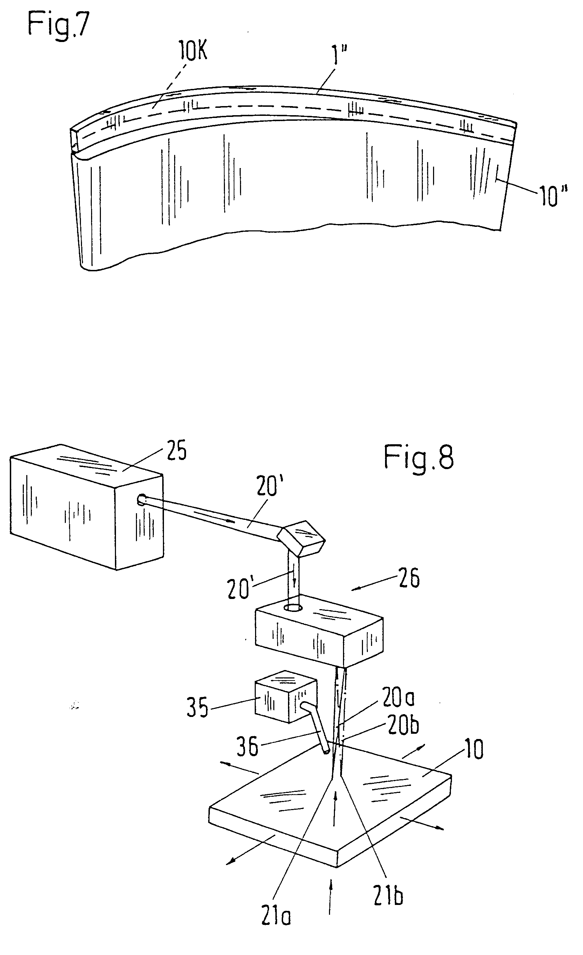

Fig.7 zeigt ein anderes Anwendungsbeispiel des erfindungsgemässen Verfahrens. Hier wird eine dünnwandige Turbinenschaufel, die das Ausgangssubstrat 10" bildet, mit einer Rippe 1" - unter Verwendung von Hartmetall oder Hartlegierung - gepanzert. (Die gestrichelt gezeichnete Linie 10k ist die hintere Kante der Turbinenschaufel.) Die Rippe ist beispielsweise 0,4 mm dick und 1,5 mm hoch.

Mit dem erfindungsgemässen Verfahren lassen sich auch Reparaturarbeiten beispielsweise an defekten Turbinenschaufeln ausführen.

Die Anordnung zur Durchführung eines erfindungsgemässen Verfahrens, die in Fig.8 dargestellt ist, besteht aus folgenden Komponenten: einem Hochleistungslaser 25, einer Vorrichtung 26 zur Lenkung des Laserstrahls 20', einer Vorrichtung 35 zum Zuführen von Auftragsmaterial und von Schutzgas sowie einer Platte 10, die als Ausgangssubstrat dient und in allen Raumrichtungen gesteuert bewegbar (durch Pfeile angedeutet) ist.

Anhand der Anordnung der Fig.8 soll näher erläutert werden, wie mit einem kontinuierlich betriebenen Laser das erfindungsgemässe Verfahren durchführbar ist: Die Vorrichtung 26 weist beispielsweise mindestens einen gesteuert formbaren Spiegel auf, der aus einer flexiblen, spiegelnden Folie mit einer Vielzahl von Stellelementen auf deren Rückseite besteht (sogenannte "intelligente Optik"). Mit einem derartigen Spiegel kann der aus der Vorrichtung 26 austretende Laserstrahl 20a, der in einem Punkt 21a auf der Platte 10 auftrifft, rasch auf einen zweiten Punkt 21b (Strahl 20b) umgelenkt werden. Der Laserstrahl lässt sich auf diese Weise in schnellem Wechsel - beispielsweise alle 10 ms - zwischen zwei oder auch mehr Punkten hin- und herlenken. Dabei können diese Punkte so weit voneinander entfernt sein, dass die erzeugten Wechselwirkungszonen sich nicht gegenseitig berühren oder überlappen. Die Pulverzufuhr über das Rohr 36 muss dabei mit einem genügend breiten Strahl erfolgen, damit alle Wechselwirkungszonen Auftragsmaterial empfangen können.

## Patentansprüche

1. Verfahren zum Herstellen von Metallstrukturen durch wiederholten und gesteuerten Auftrag von mittels eines Lasers aufgeschmolzenem Metallpulver oder Metalldraht auf ein Substrat, mit welchem Verfahren dünne Strukturelemente erzeugt werden, die rippen-, bänder- oder säulenförmig ausgebildet sind, wobei das aufgetragene Material in einer Wechselwirkungszone auf dem Substrat unter Bildung einer metallurgischen Bindung rasch erstarrt, der bereits hergestellte Teil der Metallstruktur selbst als Substrat dient, dadurch gekennzeichnet daß die Energieeinstrahlung pulsartig erfolgt, so dass während den Pausen zwischen aufeinanderfolgenden Energiepulsen die jeweils aufgetragene Materialmenge im wesentlichen aufgrund von Wärmeableitung in das Substrat erstarrt, ohne daß dabei Mittel zum zusätzlichen Kühlen eingesetzt werden müssen, und bei der Erzeugung der dünnen Strukurelemente das Auftragsmaterial nicht kontinuierlich sondern portionenweise aufgebracht wird.

2. Verfahren nach Anspruch 1 mit einem gepulst betriebenen Laser.

3. Verfahren nach Anspruch 1 mit einem kontinuierlich betriebenen Laser, wobei zum Zweck der Pulserzeugung mittels einer optischen Vorrichtung, die mindestens einen gesteuert beweglichen und/oder verformbaren Spiegel aufweist, der Laserstrahl während kurzen Zeitintervallen auf die Wechselwirkungszone, die eine unter mehreren sein kann, gelenkt wird.

4. Verfahren nach einem der Ansprüche 1 bis 3, wobei ein $CO_2$-Gaslaser und ein Schutzgas verwendet werden.

**5.** Verfahren nach Anspruch 4, dadurch gekennzeichnet, dass die Verfahrensparameter solcherart eingestellt werden, dass die Energie des Pulses im Bereich zwischen 0.01 und 500 J liegt und die in die Wechselwirkungszone pro Flächeneinheit eingestrahlte Energie mindestens 10 kW/cm$^2$ beträgt.

**6.** Verfahren nach einem der Ansprüche 1 bis 5, dadurch gekennzeichnet, dass das Verhältnis von Pulsdauer zu Dauer zwischen aufeinander folgenden Pulsen für die gleiche Wechselwirkungszone im Bereich zwischen 1:2 und 1:100 liegt.

**7.** Verfahren nach einem der Ansprüche 1 bis 6, dadurch gekennzeichnet, dass die pro Puls aufgetragene Materialmenge im Bereich zwischen 0.001 und 10 mg liegt.

**8.** Verfahren nach einem der Ansprüche 1 bis 7, dadurch gekennzeichnet, dass die zugeführte Materialmenge entsprechend der Energieeinstrahlung zeitabhängig erfolgt.

**9.** Verfahren nach einem der Ansprüche 1 bis 8, dadurch gekennzeichnet, dass die Herstellung der Metallstrukturen teilweise mit nichtgepulster Energieeinstrahlung durchgeführt wird.

**10.** Verfahren nach einem der Ansprüche 1 bis 9, dadurch gekennzeichnet, dass vorzugsweise die Energie des Pulses zwischen 1 und 2 J, die Pulsdauer zwischen 0,7 und 2 ms und das Verhältnis von Pulsdauer zu Dauer zwischen aufeinander folgenden Pulsen zwischen 1:40 und 1:20 liegen.

**11.** Anlage mit einem Hochleistungslaser (25) und einer Vorrichtung (35, 36) zum Zuführen von Auftragsmaterial und von Schutzgas zum Durchführen eines Verfahrens nach einem der Ansprüche 1 bis 10, dadurch gekennzeichnet, dass das Auftragsmaterial (31) nicht kontinuierlich sondern portionenweise aufgebracht wird, dass die Energieeinstrahlung mit dem Hochleistungslaser (25) pulsweise erfolgt, dass während den Pausen zwischen aufeinanderfolgenden Energieimpulsen die jeweils aufgetragende Materialmenge genügend Zeit zu erstarren hat, ohne dass dabei Mittel zum zusätzlichen Kühlen eingesetzt werden müssen, wobei ferner eine Vorrichtung zur Lenkung des Laserstrahls (26) und eine Haltevorrichtung für ein Substrat (1, 10) vorgesehen sind.

## Claims

**1.** A process for the production of metal structures by repeated and controlled application of metal wire or metal powder melted by means of a laser, to a substrate, with which process thin structural elements are produced in the form of ribs, bands or columns, the applied material rapidly solidifying in an interaction zone on the substrate to form a metallurgical bond, that part of the metal structure which is already produced itself serves as substrate, characterised in that the energy radiation is pulsed so that during the intervals between consecutive energy pulses the amount of material applied at any time solidifies substantially as a result of thermal conduction to the substrate, without it being necessary to use additional cooling means, and in the production of the thin structural elements the application is applied not continuously but in batches.

**2.** A process according to Claim 1 comprising a pulsed laser.

**3.** A process according to Claim 1 comprising a continuously operated laser, wherein, for the purpose of pulse generation, the laser beam is guided, during short intervals of time, on to the interaction zone, which may be one of many, by means of an optical device comprising at least one controllably movable and/or deformable mirror.

**4.** A process according to any one of Claims 1 to 3, wherein a $CO_2$ gas laser and a protective gas are used.

**5.** A process according to Claim 4, characterised in that the process parameters are so set that the pulse energy is in the range between 0.01 and 500 J and the energy radiated into the interaction zone per unit area is at least 10 kW/cm$^2$.

**6.** A process according to any one of Claims 1 to 5, characterised in that the ratio of the pulse duration to the time between successive pulses for the same interaction zone is in the range between 1:2 and 1:100.

**7.** A process according to any one of Claims 1 to 6, characterised in that the amount of material applied per pulse is in the range between 0.001 and 10 mg.

**8.** A process according to any one of Claims 1 to 7, characterised in that the quantity of material supplied is effected in time-dependent relationship in accordance with the energy radiation.

9. A process according to any one of Claims 1 to 8, characterised in that the production of the metal structures is partially effected with non-pulsed energy radiation.

10. A process according to any one of Claims 1 to 9, characterised in that the pulse energy is preferably between 1 and 2 J, the pulse duration between 0.7 and 2 ms and the ratio of the pulse duration to the time between successive pulses between 1:40 and 1:20.

11. An installation for performing a process according to any one of Claims 1 to 10, comprising a high-power laser (25), means (35, 36) for feeding application material and protective gas, for performing a process according to any one of Claims 1 - 10, characterised in that the application material (31) is not applied continuously but in batches, in that the energy radiation with the high-power laser (25) is effected pulsewise, in that during the intervals between consecutive energy pulses the amount of material applied at any time has sufficient time to solidify without it being necessary to use additional cooling means, there also being provided a device for guiding the laser beam (26) and a holding device for a substrate (1, 10).

## Revendications

1. Procédé de fabrication de structures métalliques par dépôt répété et commandé sur un substrat de poudre métallique ou de fil métallique, fondu(e) au moyen d'un laser, procédé à l'aide duquel on produit des éléments de structure minces, réalisés en forme de nervures, de bandes ou de colonnes, le matériau déposé étant solidifié rapidement dans une zone d'effet mutuel, sur le substrat, en constituant une liaison métallique, la partie déjà fabriquée de la structure métallique servant elle-même de substrat, caractérisé en ce que le rayonnement d'énergie s'effectuant par impulsions, si bien qu'entre les pauses existant entre des impulsions d'énergie se succédant la quantité de matériau chaque fois déposée se solidifie pratiquement, du fait de la conductibilité thermique dans le substrat, sans devoir alors utiliser des moyens pour obtenir un refroidissement supplémentaire et le matériau de déposition étant appliqué lors de la génération des éléments de structure minces non pas de façon continue mais par portions.

2. Procédé selon la revendication 1, utilisant un laser à fonctionnement pulsé.

3. Procédé selon la revendication 1, avec un laser fonctionnant de façon continue, où, dans le but de générer des impulsions, on dirige au moyen d'un dispositif optique, présentant au moins un miroir à mobilité commandée et/ou déformable, le rayon laser pendant de brefs intervalles de temps sur la zone d'effet mutuel, qui peut être une zone unique ou une pluralité de zones.

4. Procédé selon l'une des revendications 1 à 3, utilisant un laser à gaz $CO_2$ et un gaz protecteur.

5. Procédé selon la revendication 4, caractérisé en ce que les paramètres de procédé sont réglés de manière que l'énergie de l'impulsion est située dans la plage comprise entre 0,01 et 500 J et l'énergie introduite par rayonnement dans la zone d'effet mutuel, par unité de surface, étant d'au moins 10 kW/cm$^2$.

6. Procédé selon l'une des revendications 1 à 5, caractérisé en ce que le rapport entre la durée d'impulsion et la durée entre les impulsions se succédant les unes les autres pour la même zone d'effet mutuel est compris dans la plage allant de 1:2 à 1:100.

7. Procédé selon l'une des revendications 1 à 6, caractérisé en ce que la quantité de matériau déposée par impulsion est située dans la plage comprise entre 0,001 et 10 mg.

8. Procédé selon l'une des revendications 1 à 7, caractérisé en ce que la quantité de matériau amenée évolue en fonction du temps, de manière correspondante au rayonnement servant à introduire l'énergie.

9. Procédé selon l'une des revendications 1 à 8, caractérisé en ce que la fabrication des structures métalliques est effectuée partiellement avec un rayonnement d'introduction d'énergie non pulsé.

10. Procédé selon l'une des revendications 1 à 9, caractérisé en ce que, de préférence, l'énergie de l'impulsion est comprise entre 1 et 2 J, la durée d'impulsion est comprise entre 0,7 et 2 ms et le rapport entre la durée d'impulsion et la durée entre des impulsions se succédant est compris dans la plage allant de 1:40 à 1:20.

11. Installation, équipée d'un laser à haute puissance (25) et d'un dispositif (35, 36) pour amener du matériau de déposition et du gaz protecteur, pour mettre en oeuvre un procédé selon l'une des revendications 1 à 10, caractérisée en ce que le matériau de déposition (31) n'est pas appliqué de façon continue mais par portions, en ce que l'introduction d'énergie s'effectue avec un laser à haute puissance (25) rayonnant de façon pulsée, en ce que, pendant les pauses existant entre des impulsions successives d'énergie, la quantité de matériau chaque fois appliquée dispose de suffisamment de temps pour se solidifier, sans devoir alors mettre en oeuvre des moyens pour obtenir un refroidissement supplémentaire, et un dispositif de direction du rayon laser (26) et un dispositif de maintien pour un substrat (1, 10) étant en outre prévus.

Fig.1

Fig.2

Fig.3

Fig.4

Fig.5

Fig.6

Fig.7

Fig.8